Europäisches Patentamt

**European Patent Office**

Office européen des brevets

(11) Publication number: **0 056 893**
**A1**

## (12) EUROPEAN PATENT APPLICATION

(21) Application number: **81301372.9**

(22) Date of filing: **30.03.81**

(51) Int. Cl.³: **F 16 K 31/126**

(30) Priority: **26.01.81 GB 8102290**

(43) Date of publication of application:
**04.08.82 Bulletin 82/31**

(84) Designated Contracting States:
**BE DE FR IT NL**

(71) Applicant: **British Gas Corporation
Rivermill House 152 Grosvenor Road
London SW1V 3JL(GB)**

(72) Inventor: **Stoves, Derek
28 Malaga Close St. Johns
Westerhope Newcastle upon Tyne(GB)**

(74) Representative: **Wallace, Walter
British Gas Corporation Patents Department 326 High
Holborn
London, WC1V 7PT(GB)**

(54) Fluid flow control valve and actuator therefor.

㊗ An actuator for a fluid flow control valve having a valve closure member actuator rod 29 coupled to a plurality of diaphragms 21. Each diaphragm with an associated partition member 23 encloses an elementary control chamber 24 which is coupled by way of a transfer port 26 to a source of control pressure signals.

FIG.2.

Croydon Printing Company Ltd.

This invention relates to valves for the control of fluid flow in pipelines, and in particular, to actuators for controlling pressure downstream of a valve by deriving a feedback pressure signal from a downstream point.

One method frequently employed to control the flow of fluid in a pipeline by means of a control valve is to provide a feedback of fluid pressure from downstream of the valve and to connect the feedback to a diaphragm actuator which, acting against a spring system or deadweight load, opens and shuts the valve as the pressure downstream decreases and increases. A substantial force is required to provide a control system with satisfactory characteristics particularly when control pressure is low. With a conventional single diaphragm this necessitates the use of a large space-occupying diaphragm area. Failure of this diaphragm will result in total loss of control unless there are additional control devices in the line. Furthermore, with a large diaphragm the shape of the control chamber is usually such that a large volume exists under the diaphragm and this, in turn, results in a slow response time to pressure changes.

In order to overcome these drawbacks a control valve with a plurality of diaphragms has now been devised. The system has the advantage that it is more compact than a single diaphragm, it has some safeguard in the event of failure of a diaphragm, and the total volume in the pressurised chamber under the diaphragm is reduced, providing a more rapid response to changes.

Accordingly the present invention provides an actuator for a fluid flow control valve comprising an enclosure member having a plurality of diaphragm members therein, a plurality of partition members within said enclosure each defining with one of said diaphragm members and the enclosure member an elementary control chamber, and actuator means coupled to each of said diaphragm members and having means for coupling to a fluid flow control valve.

An embodiment of the invention will not be described by way of example with reference to the accompanying drawings, in which:-

Figure 1 is a schematic diagram of a prior art valve actuator, and

Figure 2 is a schematic diagram of an actuator in accordance with the present invention.

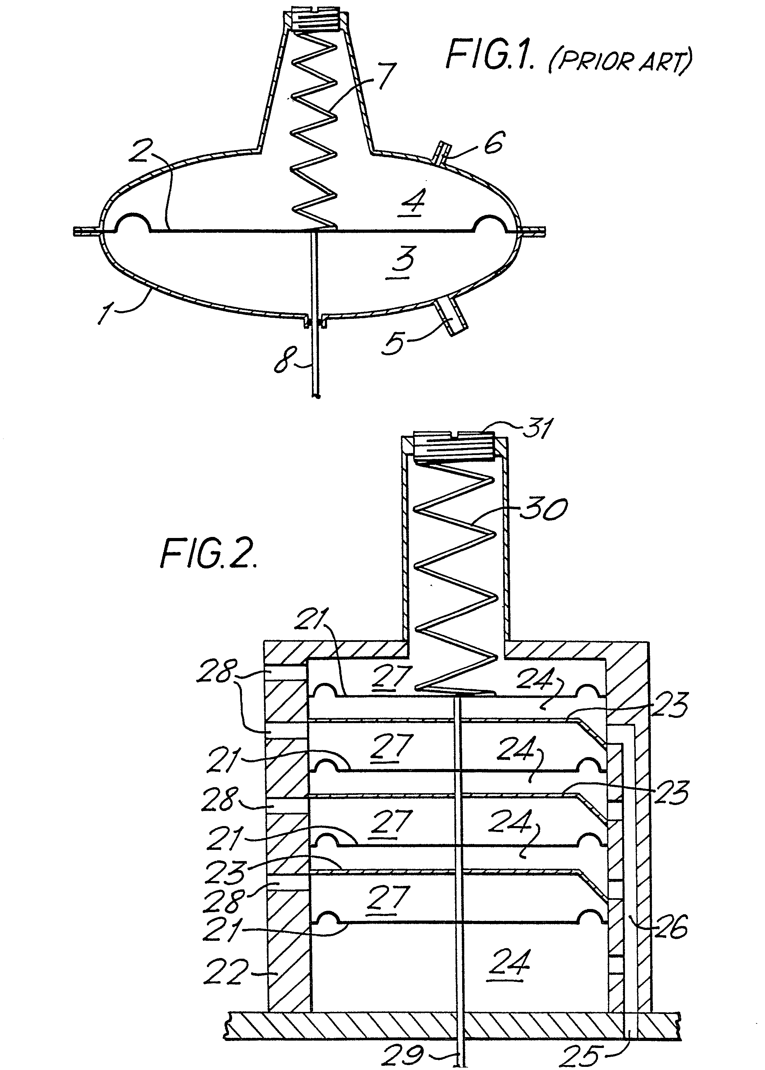

Referring now to Figure 1 of the drawings the prior art fluid flow control valve actuator has a body 1 within which is mounted a diaphragm 2 dividing the actuator into two parts, a control chamber 3 and a vent chamber 4. The control chamber communicates with a control pressure feedback source by way of an inlet port 5. The vent chamber is connected to the atmosphere by way of an outlet port 6. A bias spring 7 coupled to the diaphragm provides a restoring force against which the control pressure works. An actuator rod 8 transmits the movement of the diaphragm to a control valve.

A multi-diaphragm control valve actuator in accordance with the invention is shown in Figure 2. A plurality of relatively smaller diaphragms 21 are mounted within a valve actuator body 22. The interior of the actuator body is subdivided by a number of partitions 23, each of which, in cooperation with the actuator body 22 and a diaphragm 21 defines elementary control chambers 24. An inlet port 25 couples a control pressure feedback signal by way of transfer passage 26 to each elementary control chamber 24. The chambers 27 associated with the elementary control chambers 24 communicate with a reference pressure, which may be atmosphere or other applied pressures, by way of ports 28. An actuator rod 29 connected to all of the diaphragms 21 transmits the movement of the diaphragms to a valve (not shown). A bias spring 30 provides a restoring force against which the control pressure works, and this force is adjustable by an adjuster 31.

Various modifications are envisaged whilst remaining within the ambit of the invention. It is not necessary for all of the actuator control diaphragms 21 to be of equal size and they could readily be connected to different control pressure sources, for example, derived from different points in the pipeline in order to change the controlled fluid flow output of the valve. The vent ports 28 may be taken to atmosphere or another pressure source.

A particular advantage with the present invention is that in the event of a diaphragm becoming redundant, for example punctured, then although the level of controlled pressure will fall slightly, control will be maintained by the remaining diaphragms.

0056893

CLAIMS

1.   An actuator for a fluid flow control valve comprising an enclosure member having a plurality of diaphragms therein, a plurality of partition members within said enclosure member each defining with one of said diaphragms and said enclosure member an elementary control chamber, and actuator means coupled to each of said diaphragms and having means for coupling to a fluid flow control valve.

2.   An actuator for a fluid flow control valve including a transfer port to carry a control pressure signal to each of said elementary control chambers.

3.   An actuator as claimed in Claim 2 wherein the surface of each of said disphragms remote from its associated elementary control chamber is contiguous with a chamber having a port thereto to which a reference pressure is applied.

4.   An actuator for a fluid flow control valve substantially as herein described with reference to and as shown in Figure 2 of the accompanying drawing.

5.   A fluid flow control valve incorporating an actuator as claimed in any one of the preceding claims.

0056893

1/1

FIG.1. *(PRIOR ART)*

FIG.2.

0056893

European Patent
Office

**EUROPEAN SEARCH REPORT**

Application number

EP 81 30 1372.9

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>GB - A - 1 463 646</u> (SAUTER)<br>* fig. 2 *<br>-- | 1 | F 16 K 31/126 |
| A | <u>GB - A - 1 044 348</u> (CIE PARISIENNE D'OU-<br>TILLAGES A AIR COMPRIME)<br>-- | | |
| A | <u>FR - A - 1 487 862</u> (POLITECHNIKA WARSZAW-<br>SKA)<br>-- | | **TECHNICAL FIELDS SEARCHED (Int.Cl.³)** |
| A | <u>DE - U - 1 962 754</u> (MACHINEFABRIEK SEM-<br>PRESS-PERSOONSHAVEN)<br>---- | | F 16 K 31/00 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X | The present search report has been drawn up for all claims

| Place of search | Date of completion of the search | Examiner |
|---|---|---|
| Berlin | 19-04-1982 | SCHLABBACH |

EPO Form 1503.1   06.78